# EUROPEAN PATENT APPLICATION

(11) **EP 4 667 162 A1**
(43) Date of publication of application: **24.12.2025**
(21) Application number: 25157032.1
(22) Date of filing: 11.02.2025
(51) Int. Cl.: B25F 5/00

(54) **ELECTRIC WORK MACHINE**

(30) Priority: 17.06.2024 JP 2024097574
(71) Applicant: Yamabiko Corporation, Ohme-shi, Tokyo 198-8760 (JP)
(72) Inventor: YAMAGUCHI, Sakae, Ohme-shi, Tokyo, 1988760 (JP); TAKANO, Kota, Ohme-shi, Tokyo, 1988760 (JP); KOGA, Naoki, Ohme-shi, Tokyo, 1988760 (JP)
(74) Representative: Winter, Brandl - Partnerschaft mbB

(57) **Abstract**

To provide a electric work machine with improved workability at high output, configured to cut a work target, comprising: a working portion configured to cut the work target and a main body including: a housing; a flow path forming portion; a motor; and a control unit, wherein the motor generates rotational power for driving the working portion, the control unit electrically controls rotation of the motor, the flow path forming portion forms an air flow path including a first air flow path and a second air flow path, the first air flow path communicates with an exterior of the housing to allow external air to flow to the motor via the control unit, and the second air flow path communicates with the exterior of the housing so as to allow external air to flow directly to the motor.

## Description

### BACKGROUND

The present application claims priority under 35 U.S.C. §119 to Japanese Patent Application No. 2024-097574, filed June 17, 2024, the contents of which are incorporated herein by reference in their entirety. The present disclosure relates to an electric work machine.

### RELATED ART

Patent Publication No. 2011-135840 discloses a technique related to an electric hedge trimmer which is compact and improve workability by shortening a dimension in an output axis direction of a motor.

This electric hedge trimmer includes a flat motor provided inside a housing which includes: a rotor having a disc-shaped coil disk with plural substantially toroidal coils arranged in a circumferential direction around a motor output shaft, as seen in a shaft line direction of a motor output shaft, and a magnet that generates magnetic flux passing through the coil disk in the shaft line direction of the motor output shaft; a gear portion that is provided adjacent to the flat motor inside the housing, is connected to the motor output shaft so as to reduce and output rotation of the motor output shaft, and has a gear portion output shaft; a cam that is provided adjacent to the gear portion inside the housing, is connected to the gear portion output shaft so as to convert rotation movement of the gear portion output shaft into reciprocating movement; and a blade portion that protrudes from the housing and is connected to the cam so as to move reciprocatingly.

Nevertheless, the conventional art disclosed in Patent Document 1 still has a room for improvement.

In the light of the above-described circumstances, the present disclosure provides an electric work machine with improved workability at higher output.

According to an aspect of the present disclosure, An electric work machine configured to cut a work target, comprising: a working portion and a main body, wherein the working portion is configured to cut the work target, the main body includes: a housing; a flow path forming portion; a motor; and a control unit, the motor is configured to generate rotational power for driving the working portion, the control unit is configured to electrically control rotation of the motor, the flow path forming portion forms an air flow path including a first air flow path and a second air flow path, the first air flow path is configured to communicate with an exterior of the housing so as to allow external air to flow to the motor via the control unit, and the second air flow path is configured to communicate with an exterior of the housing so as to allow external air to flow directly to the motor can be provided.

According to such an aspect, the workability at high output can be improved.

### BRIEF DESCRIPTION OF DRAWINGS

FIG. 1 is an overall perspective view of a chainsaw 11 seen from above.
FIG. 2 is a left side view of the chainsaw 11.
FIG. 3 is a perspective view of a housing and a battery seen from below.
FIG. 4 is a perspective view illustrating the housing and the battery seen from below in a state of detaching a left cover of the housing.
FIG. 5 is a perspective view illustrating a motor, a control unit and a flow path forming portion.
FIG. 6 is a perspective view illustrating the housing, which is cut along a cross-section A-A in FIG. 2.
FIG. 7 is a left side view illustrating the motor, a second air flow path and an exhaust air flow path APex in the state of detaching the left cover of the housing.
FIG. 8 is a left side view illustrating the motor and a first air flow path with only a contour of the flow path forming portion shown, in the state of detaching the left cover of the housing.
FIG. 9 is a view illustrating a relation between a battery detachable portion of the housing, a side surface of the battery and a third air flow path.
FIG. 10 is a view illustrating the relation between the battery detachable portion of the housing, the side surface of the battery and the third air flow path.
FIG. 11 is a view illustrating the relation between the battery detachable portion of the housing, the side surface of the battery and the third air flow path.
FIG. 12 is a left side view illustrating a first air intake port that communicates with a first air flow path and a second air intake port that communicates with a second air flow path, in the state of detaching the left cover of the housing.
FIG. 13 is a left side view illustrating the first air intake port that communicates with the first air flow path and the second air intake port that communicates with the second air flow path, with only the contour of the flow path forming portion shown, in the state of detaching the left cover of the housing.

### DETAILED DESCRIPTION

Hereinafter, an example of an embodiment of the present disclosure will be described with reference to the drawings. Various features described below in the following embodiment can be combined with each other.

### 1. Overall configuration

Chapter 1 provides explanation of an electric work machine 1 according to one embodiment. The electric work machine 1 is an electric work machine for cutting a work target. Further, the electric work machine 1 is preferably a cutter (not shown), a hedge trimmer (not shown), a brush cutter (not shown) or a chainsaw 11. According to such an aspect, the work target can be cut with the cutter, the hedge trimmer, the brush cutter or the chainsaw 11 with improved workability at high output. Hereinafter, the chainsaw 11 (the electric work machine 1) will be explained as an example.

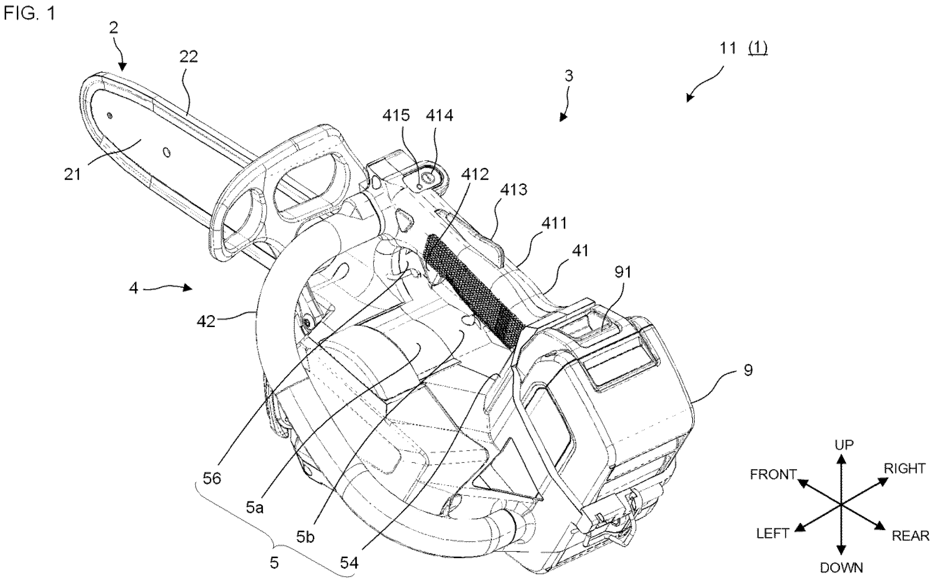

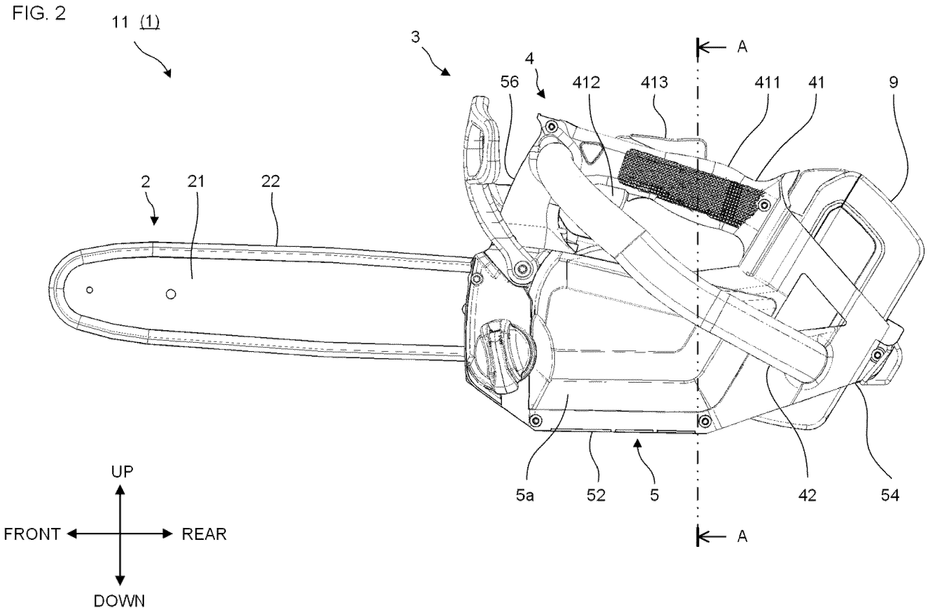

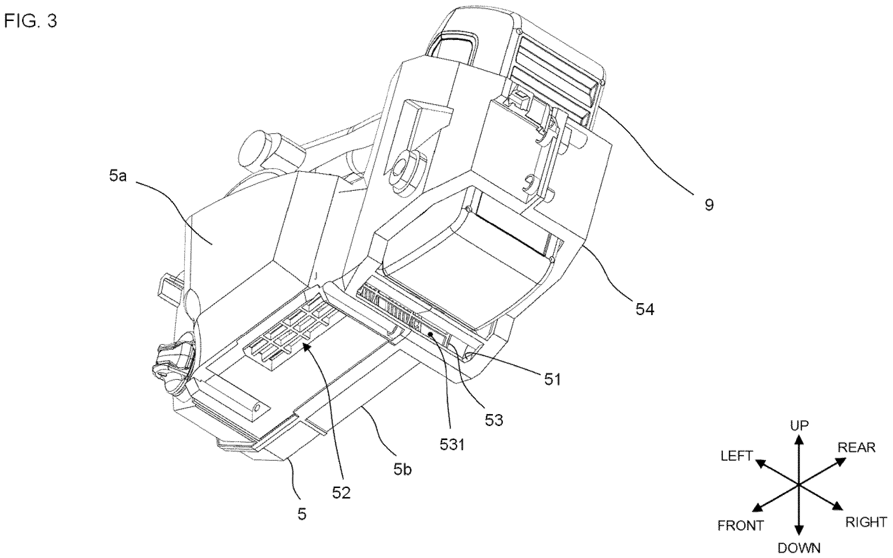

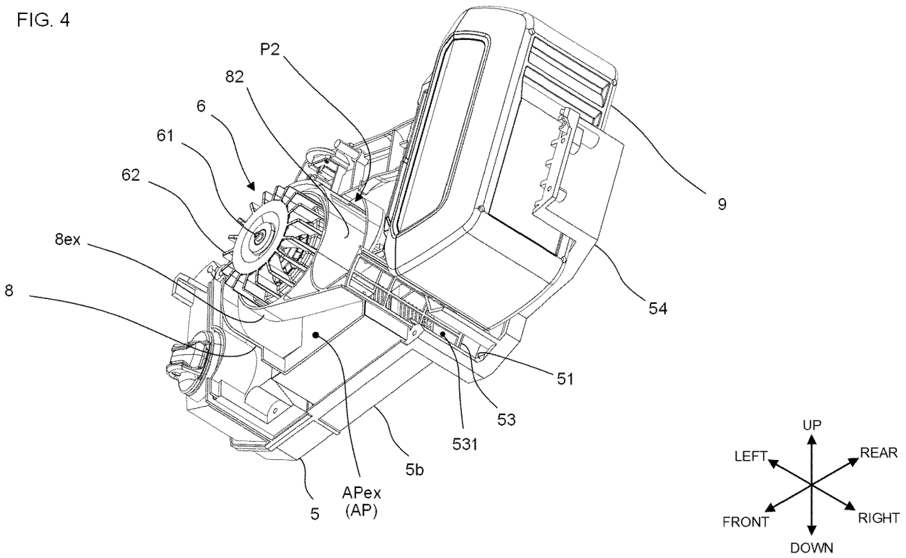

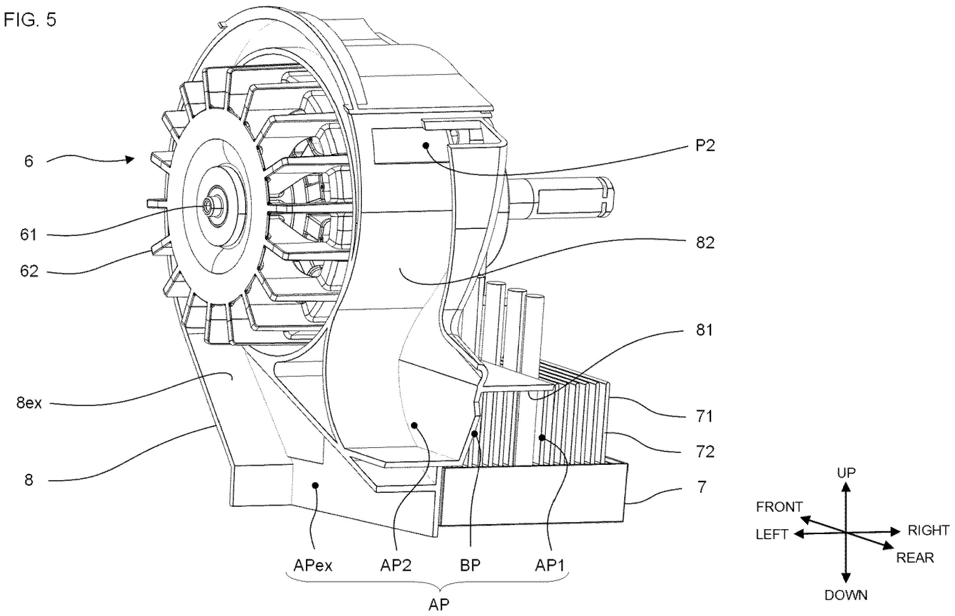

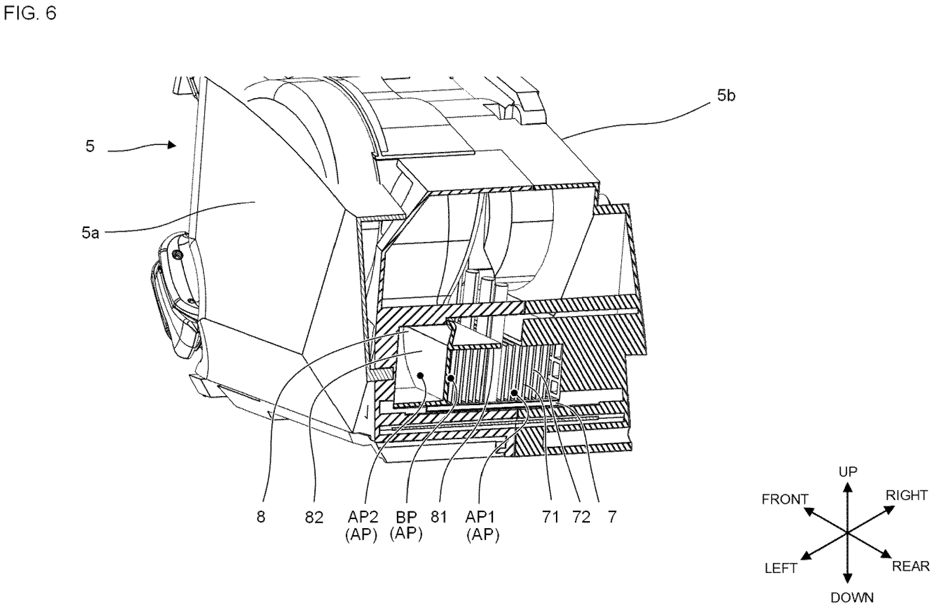

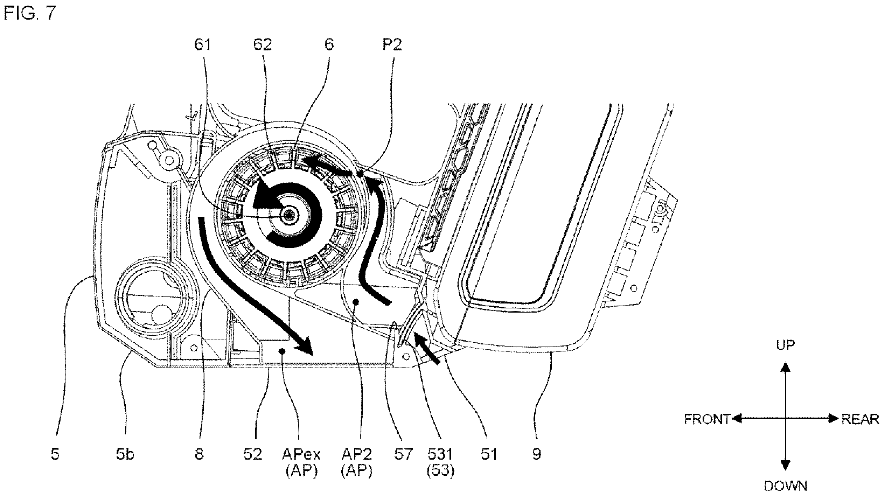

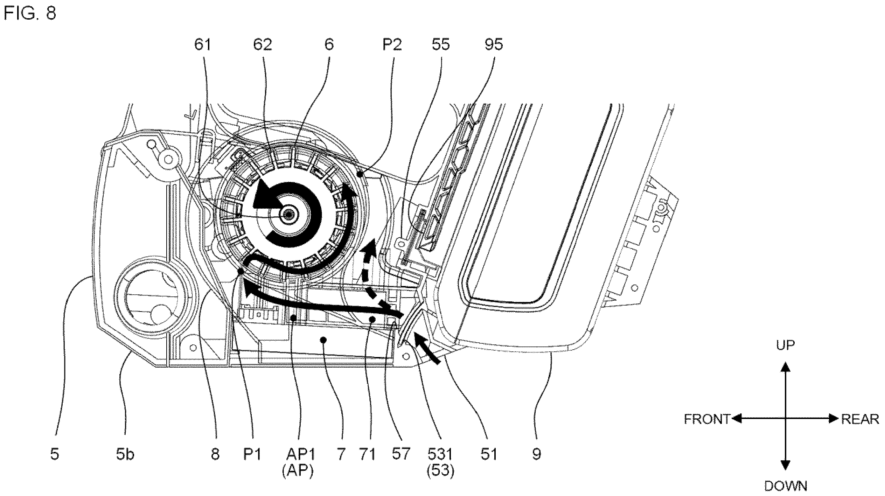

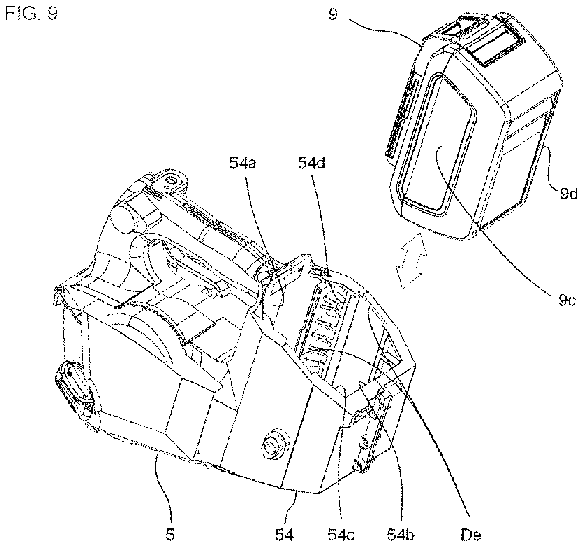

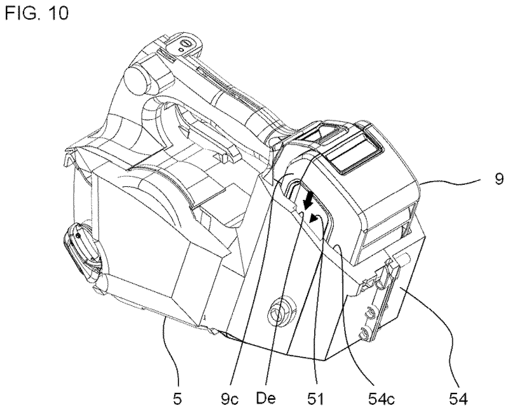

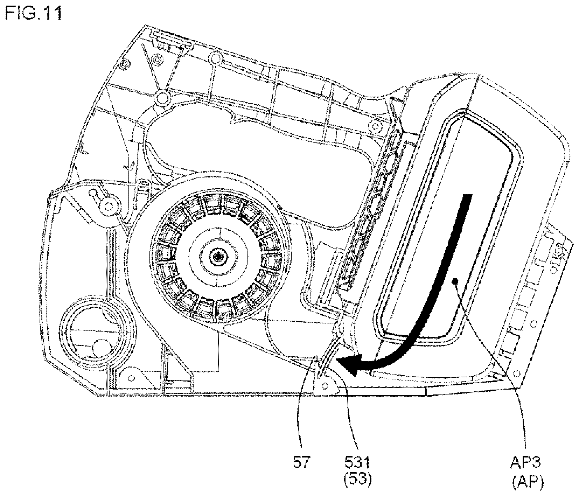

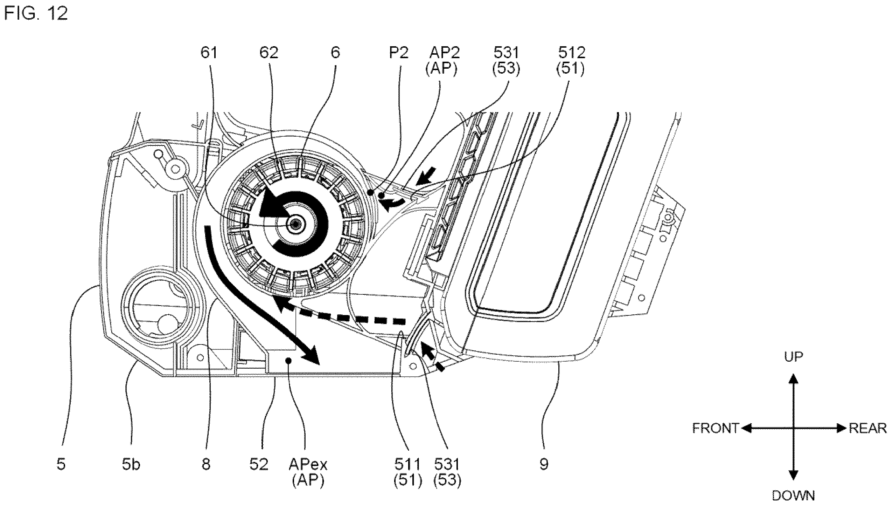

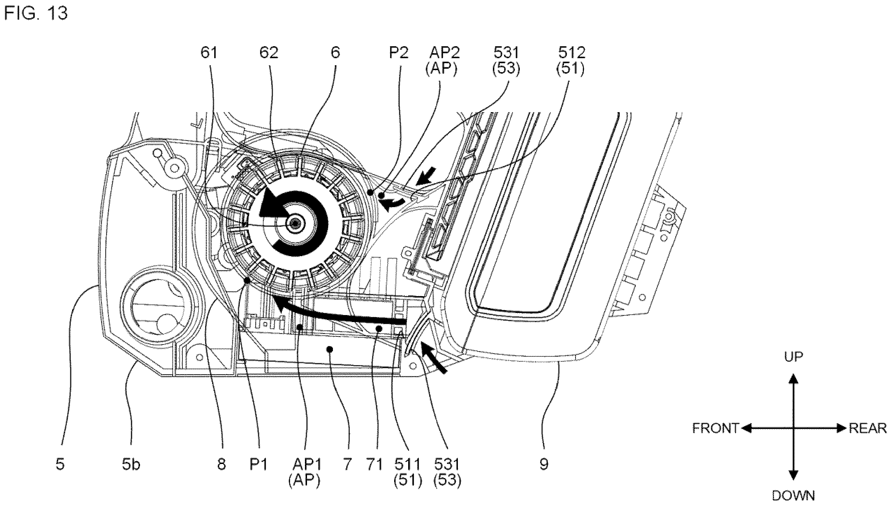

FIG. 1 is an overall perspective view of the chainsaw 11 seen from above. FIG. 2 is a left side view of the chainsaw 11. FIG. 3 is a perspective view of a housing and a battery seen from below. FIG. 4 is a perspective view illustrating the housing and the battery seen from below in a state of detaching a left cover of the housing. FIG. 5 is a perspective view illustrating a motor, a control unit and a flow path forming portion. FIG. 6 is a perspective view illustrating the housing, which is cut along a cross-section A-A in FIG. 2. FIG. 7 is a left side view illustrating the motor, a second air flow path and an exhaust air flow path APex in the state of detaching the left cover of the housing. FIG. 8 is a left side view illustrating the motor and a first air flow path with only a contour of the flow path forming portion shown, in the state of detaching the left cover of the housing. FIGs. 9 to 11 are views illustrating a relation between a battery detachable portion of the housing, a side surface of the battery and a third air flow path. Incidentally, directions of the chainsaw 11 and respective components of the chainsaw 11 will be defined according to "up/down" (vertical), "right/left" and "front/rear" illustrated in the figures (also in FIGs. 12 and 13).

The chainsaw 11 illustrated in FIGs. 1 and 2 is a small-sized chainsaw, so-called a top handle saw. This chainsaw 11, which is the electric work machine 1, includes a working portion 2 and a main body 3. Further, the main body 3 includes a handle 4, a housing 5 provided with a filter 53, a motor 6, a control unit 7, a flow path forming portion 8 and a battery 9.

### (Working portion 2)

The working portion 2 is configured to cut a work target and is configured to be connected with the main body 3. In the configuration illustrated in the figures, the working portion 2 is a chain-type cutter. The chain-type cutter is provided with a guide bar 21 and a saw chain 22.

As shown in FIGs. 1 and 2, the guide bar 21 is a plate-shaped member that is extended in a front/rear direction, and a rear end of the guide bar 21 is attached to a right front part of the main body 3. The toroidal saw chain 22 is wound around an outer peripheral portion of the guide bar 21. A rear end of the saw chain 22 is engaged with a driving gear (not shown) connected to a rotation shaft 61 of the motor 6. When the motor 6 is driven to rotate the driving gear, the saw chain 22 is rotated along an outer periphery of the guide bar 21.

### (Handle 4)

As shown in FIGs. 1 and 2, the handle 4 includes: a top handle 41 provided above the housing 5; and a horizontal handle 42 provided on a left side of the housing 5. An operator performs a work by gripping the top handle 41 and the horizontal handle 42 with his/her respective hands.

### (Top handle 41)

The top handle 41, which is the handle 4, is disposed above the housing 5. The top handle 41 is formed continuously with an upper surface of the housing 5, and is extended in a front/rear direction above the housing 5. A front side of the top handle 41 is fixed to a front end 56 of the housing 5 that protrudes upward from the housing 5. Incidentally, inside the front end 56 of the housing 5, a drive switch (not shown) is provided. This drive switch controls operations of the working portion 2. Specifically, the drive switch controls rotation speed of the motor 6 according to press-in quantity of a head thereof so as to increase or decrease rotation speed of the saw chain 22. Further, a rear side of the top handle 41 is fixed to a battery detachable portion 54 of the housing 5. When the battery 9 is attached to the battery detachable portion 54, an upper end of the battery 9 protrudes upward above the rear end of the top handle 41.

Between the front end and the rear end of the top handle 41, a gripping portion 411 extended in the front/rear direction is provided. The gripping portion 411 is inclined obliquely downward at a slight angle from the front end to the rear end of the top handle 41. The gripping portion 411 is a part gripped by the operator when he/she holds the chainsaw 11. Into a space between the gripping portion 411 and the upper surface of the housing 5, the hand of the operator is inserted.

On a lower surface of a front end of the gripping portion 411, a trigger lever 412 is arranged as a manipulating means for increasing or decreasing the rotation speed of the saw chain 22. That is, the trigger lever 412 is configured to control operation of the working portion 2 via the drive switch (not shown). The operator can manipulate the trigger lever 412 while gripping the gripping portion 411.

In addition, on an upper surface of the gripping portion 411, a lockout lever 413 is provided displaceably with respect to the trigger lever 412. Specifically, the lockout lever 413 is arranged to be freely retractable with respect to the gripping portion 411 (the top handle 41). When the operator grips the gripping portion 411, a palm of the operator presses and embed the lockout lever 413 into the gripping portion 411. For enabling the manipulation of the trigger lever 412 thereby at the first time, the lockout lever 413 and the trigger lever 412 are operationally connected with each other in the gripping portion 411. According to such a configuration, the trigger lever 412 and the lockout lever 413, both of which are provided in the gripping portion 411, constitute an manipulating mechanism. By manipulating this manipulating mechanism, operations of the working portion 2 can be controlled, that is, the rotation speed of the saw chain 22 can be increased or decreased.

As shown in FIG. 1, the chainsaw 11 in one embodiment is provided with a power switch 414 and an indication lamp 415 on an upper surface of the front end of the top handle 41. That is, the main body 3 has the power switch 414 provided on the gripping portion 411 (the housing 5).

The power switch 414 is a press-button switch that can operate the motor 6 when it is on, and stops the operation of the motor 6 when it is off. The power switch 414 is circular-shaped as seen in a plan view. The power switch 414 is switched on and off alternately, each time when it is pressed. While the drive of the motor 6 is stopped, when the power switch 414 is turned on by being pressed, the battery 9 supplies electric power to the control unit 7, so that the motor 6 enters a standby state for being driven. Then, while the lockout lever 413 is pressed in, when the trigger lever 412 is pulled, the battery 9 supplies electric power via the control unit 7 to the motor 6, thereby driving the motor 6.

The indication lamp 415 is constituted of an LED (light emitting diode) lamp that is provided on a left side of the power switch 414. The indication lamp 415 indicates an on/off status of the power switch 414. That is, the indication lamp 415 is turned on when the power switch 414 is on, and is turned off when the power switch 414 is off.

### (Horizontal handle 42)

The horizontal handle 42 is extended in the front/rear direction from a front end to a rear end of a left side surface of the housing 5. The horizontal handle 42 may be made of resin, or may be formed by bending a lightweight metal pipe. The front end of the horizontal handle 42 is attached to a left side surface of the front end of the top handle 41. The rear end of the horizontal handle 42 is disposed behind and below the housing 5, and is attached to a left side wall of the battery detachable portion 54. A part between the front end and the rear end of the horizontal handle 42 is curved so as to bulge outward to the left side surface of the housing 5 (see FIG. 1).

### (Housing 5)

The housing 5 is a box made of resin which stores a machine and electrical equipment for operating the chainsaw 11. As shown in FIGs. 4 to 8, specifically for example, the motor 6, the control unit 7, the flow path forming portion 8 and a driving mechanism (not shown) are stored in the housing 5.

Further, as shown in FIGs. 3 and 4, the housing 5 includes a left cover 5a and a right cover 5b, so that the housing 5 is divided in a right/left direction by a plane defined by front/back and up/down. Moreover, the housing 5 has the battery detachable portion 54, to which the battery 9 can be attached/detached freely. As shown in FIG. 9, the battery detachable portion 54 includes a front side surface 54a, a rear side surface 54b, a left side surface 54c and a right side surface 54d, and has a tubular shape extended from below to above, which is constituted of these surfaces. Further, the battery detachable portion 54 is formed in a rear part of the housing 5, and is inclined so that a lower part thereof may be positioned more front than an upper part thereof. On the front side surface 54a, a connection terminal 55 made of metal is provided. The connection terminal 55 is electrically connected to the motor 6 and the control unit 7. Then, a connection terminal 95 of the battery 9 is connected to the connection terminal 55 of the battery detachable portion 54, whereby the battery 9 supplies electric power to the motor 6 and the control unit 7.

### (Air intake port 51 and exhaust port 52)

In addition, the housing 5 includes: an air intake port 51 for intaking external air into the interior of the housing 5; and an exhaust port 52 for discharging the intaken air to the exterior of the housing 5. The air intake port 51 is positioned at a lower rear part of the housing 5, and the exhaust port 52 is located below the housing 5 and more front than the air intake port 51. The air intake port 51 and the exhaust port 52 are communicated respectively with an air flow path AP which is formed of the flow path forming portion 8. Details of the flow path forming portion 8 and the air flow path AP will be described below.

### (Filter 53)

As shown in FIGs. 7 and 8, the filter 53 is attached to a filter attachment portion 57 that is included in the housing 5. The filter 53 has a collection surface 531 for collecting a collection target contained in external air which is inhaled via the air intake port 51. The filter attachment portion 57 is provided between the air intake port 51 and the air flow path AP. Thereby, external air inhaled via the air intake port 51 flows into the air flow path AP via the collection surface 531 of the filter 53. In other words, the collection surface 531 is disposed to cover an inlet of the air flow path AP. Further, the filter 53 is disposed on an upper side of the air intake port 51 such that a part of the filter 53 may face the air intake port 51. That is, the collection surface 531 is disposed above the air intake port 51 so as to cover the inlet of the air flow path AP such that a part of the collection surface 531 may face the air intake port 51. The collection surface 531 is formed to have a rectangular shape as seen in a plan view, and is inclined obliquely upward from the front side to the rear side. According to such a configuration, when external air is intaken via the air intake port 51, the external air passes through the collection surface 531 from a rear lower part to a front upper part. In this case, the collection target to be collected on the collection surface 531 remains on the collection surface 531 due to suction force. Then, when the air intake is stopped, that is, when application of the suction force is released, the collection target collected on the collection surface 531 falls downward due to its own weight or vibrations caused when the chainsaw 11 is placed on the ground, thereby being removed from the collection surface 531 and released from the air intake port 51. Incidentally, the collection target is, for example, wood, branches and leaves as the work target, which are cut and become fine, cutting chips, dust and the like. According to such an aspect, the collection target collected on the collection surface 531 can be removed easily, and efficient cooling of the motor 6 can be maintained, thereby improving the workability at high output.

### (Motor 6)

As shown in FIG. 5, the motor 6 is a known electric motor, and is configured to generate rotational power for driving the working portion 2. The motor 6 is provided with the rotation shaft 61. The rotation shaft 61 is extended in the right/left direction, and a right side part of the rotation shaft 61 is connected to a driving gear (not shown) of the driving mechanism. In addition, a fan 62 is connected (mounted) to a left side part of the rotation shaft 61. This fan 62 is configured to circulate air via the air intake port 51 into an interior of the air flow path AP by rotation of the motor 6. Specifically, the fan 62 is configured to be rotated according to the rotation of the motor 6 so as to inhale air from the exterior of the housing 5 via the air intake port 51 to the interior of the housing 5, and to discharge the air from the interior of the air flow path AP via the exhaust port 52 to the exterior of the housing 5.

### (Control unit 7)

As shown in FIGs. 5 and 8, the control unit 7 has a box shape, and is fixed to the housing 5. The control unit 7 is electrically connected to the motor 6 and the battery 9 via wiring, a connector or the like so as to control electrification from the battery 9 to the motor 6. In other words, the control unit 7 is configured to electrically control the rotation of the motor 6.

Further, as shown in FIG. 5, the control unit 7 has a heat sink 71 that dissipates heat generated by the control unit 7. The heat sink 71 is disposed in the air flow path AP (as an example, in a first air flow path AP1), and is configured to exchange heat with circulated air. Moreover, the heat sink 71 has a plurality of cooling fins 72, and is disposed in the first air flow path AP1. The cooling fins 72 are provided such that longitudinal direction thereof may be parallel to a flow direction of the circulated air. According to such an aspect, the control unit 7 can be efficiently cooled by the provision of the heat sink 71, thereby more improving the workability at high output. Details of the air flow path AP and the first air flow path AP1 will be described below.

### (Flow path forming portion 8)

As shown in FIGs. 5, 7 and 8, the flow path forming portion 8 is constituted of a resin member so as to form the air flow path AP. Specifically, the flow path forming portion 8 includes the first flow path forming portion 81, a second flow path forming portion 82 and a exhaust flow path forming portion 8ex. The first flow path forming portion 81 forms the first air flow path AP1, the second flow path forming portion 82 forms the second air flow path AP2, and the exhaust flow path forming portion 8ex forms an exhaust air flow path APex. That is, the air flow path AP includes the first air flow path AP1, the second air flow path AP2 and the exhaust air flow path APex. In detail, the flow path forming portion 8 is formed of an integrated entity (integral molded article) of the first flow path forming portion 81, the second flow path forming portion 82 and the exhaust flow path forming portion 8ex. Then, by joining (fitting) the flow path forming portion 8 and the housing 5 to each other, that is, integrating the flow path forming portion 8 and the housing 5, the air flow path AP is formed. Alternatively, the first flow path forming portion 81, the second flow path forming portion 82 and the exhaust flow path forming portion 8ex may be formed separately, and the first flow path forming portion 81, the second flow path forming portion 82 and the exhaust flow path forming portion 8ex which are formed separately may be joined to one another so as to form the flow path forming portion 8. Furthermore, the air flow path AP may be formed of the integrally molded flow path forming portion 8 or the flow path forming portion 8 that is formed by the joining, and may also be formed by joining: the integrally molded flow path forming portion 8 or the flow path forming portion 8 that is formed by the joining; and the housing 5 to each other. In this case, as a method for the joining, for example, adhesion using an adhesive agent, fusion (thermal fusion, ultrasonic welding, high frequency welding and the like), fastening, fitting and the like can be exemplified.

The first air flow path AP1 and the second air flow path AP2 are configured to communicate with the exterior of the housing 5 by being communicated with the air intake port 51 respectively. In other words, the air intake port 51 is configured to communicate with the first air flow path AP1 and the second air flow path AP2. According to such an aspect, by providing the common air intake port 51 to communicate with the first air flow path AP1 and the second air flow path AP2, complication of the configuration of the air flow path AP can be prevented, thereby reducing the size of the chainsaw 11 more. Further, since the provision of only the one filter 53 is required for the common air intake port 51, the complication of the configuration of the air flow path AP can be further prevented, thereby reducing the size of the chainsaw 11 furthermore.

specifically, as shown in FIG. 5, the first air flow path AP1 and the second air flow path AP2 are configured to communicate with the air intake port 51, which is positioned in a lower rear part of the housing 5, via a branch portion BP. The branch portion BP is formed of the flow path forming portion 8, and is disposed on a front side of the battery 9 and on a lower rear part of the housing 5. That is, the air flow path AP has the branch portion BP. Then, the first air flow path AP1 is configured to communicate with the exterior of the housing 5, such that external air may flow via the control unit 7 to the motor 6. Further, the second air flow path AP2 is configured to communicate with the exterior of the housing 5, such that external air may flow directly to the motor 6. According to such an aspect, air flowing from the second air flow path AP2 to the motor 6 flows directly to the motor 6 without cooling the control unit 7. Therefore, air having a temperature lower than that of air which flows to the motor 6 after cooling the control unit 7 in the first air flow path AP1 can flow directly to the motor 6. Therefore, compared with the configuration in which all the air that has cooled the control unit 7 flows to the motor 6, the motor 6 can be cooled more efficiently.

The exhaust air flow path APex is configured to communicate with the exterior of the housing 5 via the exhaust port 52 which is positioned in a lower front part of the housing 5. The exhaust air flow path APex is configured to communicate with the exterior of the housing 5 such that the air intaken into the interior of the housing 5 may flow to the exterior of the housing 5. Furthermore, the exhaust air flow path APex is configured such that a flow path area thereof may be increased toward downstream of the air flow. According to such an aspect, an outflow loss in the exhaust air flow path APex can be reduced, whereby a flow rate of the air to be exhausted can be increased. Therefore, an amount of external air intaken into the interior of the housing 5 by the air intake port 51 can be increased, whereby an amount of air flowing in the first air flow path AP1 and the second air flow path AP2 can be increased. Thereby, the components stored in the housing 5 can be cooled more efficiently, thereby improving the workability at high output.

The first air flow path AP1 and the second air flow path AP2 are configured to guide external air to the motor 6 at different positions of the motor 6. As shown in FIG. 8, specifically, the first air flow path AP1 may be configured such that external air may flow to the motor 6 via a first position P1. In addition, the second air flow path AP2 may be configured such that external air may flow to the motor 6 via a second position P2, which is different from the first position P1. The first position P1 and the second position P2 in this case are respectively near the motor 6. According to such an aspect, air guided by the first air flow path AP1 and air guided by the second air flow path AP2 can cool different positions of the motor 6. As a result, the efficiency of cooling the motor 6 can be further enhanced, thereby more improving the workability at high output.

Moreover, a positional relation between the first position P1 and the second position P2 may be determined according to the disposition of the motor 6, a heat-generating part thereof and the like. As shown in FIG. 8, at a position corresponding to a downstream side of the first position P1 in the first air flow path AP1, the second position P2 in the second air flow path AP2 may be provided. In other words, the second position P2 is the position corresponding to the downstream side of the first air flow path AP1. According to such an aspect, the air having a lower temperature, which is guided by the second air flow path AP2 and has not cooled the control unit 7, flows on a downstream side of the first air flow path AP1, thereby cooling a position of the motor, which is hardly cooled because air in the first air flow path AP1 after cooling the control unit 7 and the motor 6 flows through. As a result, the motor 6 can be prevented from becoming locally hot, and thus can be cooled more uniformly, whereby the workability at high output is likely to be improved. Incidentally, the positional relation between the first position P1 and the second position P2 may be such that the first position P1 is positioned on a front lower side of the rotation shaft 61 and the second position P2 is positioned on a rear upper side of the rotation shaft 61 so as to be positioned on an opposite side of the first position P1 across the rotation shaft 61. In other words, the first position P1 may be positioned on the opposite side of the second position P2 across the rotation shaft 61 of the motor 6. According to such an aspect, air guided by the first air flow path and air guided by the second air flow path can cool the positions opposing to each other across the rotation shaft of the motor. As a result, the motor 6 is suppressed from becoming locally hot, and can be cooled more uniformly, thereby more improving the workability at high output.

The first air flow path AP1 may be configured to allow external air to flow to the motor 6 disposed on an upper side of the housing 5 via the control unit 7 disposed on a lower side of the housing 5. Specifically, as shown in FIG. 8, the control unit 7 is disposed directly below the motor 6 in a vertical direction of the housing 5. In other words, the control unit 7 is disposed below the motor 6. Thereby, a size of the chainsaw 11 in a front/rear direction can be reduced, thereby downsizing the chainsaw 11. Furthermore, the first air flow path AP1 may be configured such that air flows upward between the control unit 7 and the motor 6. As shown in FIG. 8, specifically, the first air flow path AP1 is configured such that air may flow upward from the rear side to the front side, and such that air may be circulated through the control unit 7 before flowing upward. In other words, the first air flow path AP1 may be, in at least a part thereof, configured to circulate external air upward, after the air passes through the control unit 7. According to such an aspect, since heat generated by the heating of the control unit 7 can be dissipated upward along the flow of the air from below to above (upward airflow), by disposing the control unit 7 below the motor 6, the control unit 7 can be cooled more, thereby preventing the chainsaw 1 from stopping due to the high temperature of the control unit 7 at high output. Therefore, according to the chainsaw 11 having such a configuration, the chainsaw 11 can exhibit the excellent workability at high output while reducing in size.

The first air flow path AP1 and the second air flow path AP2 may be configured such that external air may flow at an arbitrary air flow rate AF. The arbitrary air flow rate AF of each of the first air flow path AP1 and the second air flow path AP2 may be adjusted according to a shape and an opening area of the air intake port 51, a cross-sectional shape and a cross-sectional area of the air flow path AP, a route of the air flow path AP and the like. Specifically, in the first air flow path AP1, external air may be guided at the first air flow rate AF1 as the air flow rate AF, and in the second air flow path AP2, external air may be guided at the second air flow rate AF2, as the air flow rate AF which is different from the first air flow rate AF1. In other words, the first air flow path AP1 may be configured such that external air may flow to the motor 6 at the first air flow rate AF1. The second air flow path AP2 may be configured such that external air may flow to the motor 6 at the second air flow rate AF2, which is different from the first air flow rate AF1. Specifically, the first air flow rate AF1 and the second air flow rate AF2 may be set by considering predetermined conditions such that the motor 6 may be cooled appropriately. These predetermined conditions can include, for example, the disposition of the motor 6 and the control unit 7 and their respective heat generation quantity, a temperature difference between a temperature of the motor 6 near the first position P1 and a temperature of the motor 6 near the second position P2, a temperature difference between a temperature of air guided to the motor 6 at the first position P1 and a temperature of air guided to the motor 6 at the second position P2, and the like. According to such an aspect, the first air flow rate AF1 of the air guided to the motor 6 after cooling the control unit 7 and the second air flow rate AF2 of the air guided directly to the motor 6 without cooling the control unit 7 can be set to be different from each other. As a result, the motor 6 can be cooled more appropriately, thereby further improving the workability at high output.

Furthermore, the first air flow rate AF1 may be higher than the second air flow rate AF2 in an arbitrary ratio. As shown in FIG. 6, specifically, by considering the heat quantity generated by the control unit 7, the cross-sectional area of the first air flow path AP1 may be 1.5 times as large as the cross-sectional area of the second air flow path AP2 such that the first air flow rate AF1 may be substantially twice as high as the second air flow rate AF2 in ratio. The arbitrary ratio in this case may range, for example, from 1.01 to 4, preferably from 1.5 to 3, and more preferably from 2 to 2.5. Specifically, the arbitrary ratio may be, for example, 1.01, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2, 2.05, 2.1, 2.15, 2.2, 2.25, 2.3, 2.35, 2.4, 2.45, 2.5, 2.55, 2.6, 2.65, 2.7, 2.75, 2.8, 2.85, 2.9, 2.95, 3, 3.05, 3.1, 3.15, 3.2, 3.25, 3.3, 3.35, 3.4, 3.45, 3.5, 3.55, 3.6, 3.65, 3.7, 3.75, 3.8, 3.85, 3.9, 3.95 or 4, and may also be in ranges between any two of the values exemplified above. According to such an aspect, the first air flow rate AF1 that is guided indirectly to the motor 6 via the control unit 7 is higher than the second air flow rate AF2 that is guided directly to the motor 6 without cooling the control unit 7. Therefore, since sufficient air volume for cooling the control unit 7 can be secured, thereby preventing or suppressing the chainsaw 11 from stopping due to the heat generated by the control unit 7. In addition, since appropriate air volume can be supplied to a position of the motor 6 that is hardly cooled (on a downstream side of the first air flow path AP1), the motor 6 can be cooled more efficiently. As a result, the control unit 7 and the motor 6 can be cooled as necessary and sufficiently, thereby further improving the workability at high output.

### (Battery 9)

As shown in FIGs. 1 and 2, the battery 9 is a known battery, which is configured to store a secondary battery such as a lithium ion battery in a rectangular parallelepiped case extended in the vertical direction. As shown in FIG. 2, the battery 9 is formed to have a height that is larger than a height of a rear end of the housing 5. Such a battery 9 has a size larger than that of a battery in a type to be stored in the housing 5. Then, the battery 9 has sufficiently high output and charging capacity suitable for work.

When attaching the battery 9 to the battery detachable portion 54, the battery 9 is fitted to the battery detachable portion 54 by sliding the battery 9 from above to below with respect to the battery detachable portion 54. Then, when the battery 9 is moved to a position where the battery 9 is supported by the battery detachable portion 54, an engagement portion of the battery 9 is engaged with the battery detachable portion 54 so as to be fixed to the battery detachable portion 54.

The battery 9 attached to the battery detachable portion 54 is disposed to be inclined such that a lower part thereof may be positioned more front than an upper part thereof. The battery 9 is provided with the connection terminal 95 and is fixed to the battery detachable portion 54, whereby the connection terminal 95 of the battery 9 and the connection terminal 55 of the battery detachable portion 54 are electrically connected. Then, by connecting the connection terminal 95 of the battery 9 to the connection terminal 55 of the battery detachable portion 54, the battery 9 supplies electric power to the motor 6 and the control unit 7.

For detaching the battery 9 from the battery detachable portion 54, when the connecting lever 91 (see FIG. 1) of the battery 9 is pulled up, the engaged state between the battery detachable portion 54 and the engagement portion is released, whereby the battery 9 can be slid upward with respect to the battery detachable portion 54.

### [Other]

The electric work machine 1 according to one embodiment may be implemented in a following aspect.

In the one embodiment described above, the case in which external air is intaken from the air intake port 51 positioned at the lower rear part of the housing 5 has been described as an example, but the present disclosure is not limited to this aspect. For example, external air may be intaken via the air intake port 51 and a battery cooling flow path AP3, which are formed by attaching the battery 9 to the housing 5. As shown in FIGs. 9 to 11, specifically, by attaching the battery 9 to the battery detachable portion 54, the air intake port 51 and the battery cooling flow path AP3 are formed respectively on a left side and a right side, with recesses De of a left side surface 54c and a right side surface 54d of the battery detachable portion 54 and a left side surface 9c and a right side surface 9d of the battery 9. According to such a configuration, the air intake port 51 and the battery cooling flow path AP3 are configured such that external air of the housing 5 may flow into the air flow path AP, which is formed of the flow path forming portion 8. That is, the battery 9 is disposed in the housing 5 so as to form the battery cooling flow path AP3 to communicate with the air flow path AP between the battery 9 and the housing 5. According to such an aspect, while the different positions of the motor 6 can be cooled by the first air flow path AP1 and the second air flow path AP2, the battery 9 can be cooled by the battery cooling flow path AP3, thereby improving the workability at high output.

FIG. 12 is a left side view illustrating a first air intake port that communicates with the first air flow path and a second air intake port that communicates with the second air flow path, in the state of detaching the left cover of the housing. FIG. 13 is a left side view of the first air intake port that communicates with the first air flow path and the second air intake port that communicates with the second air flow path with only the contour of the flow path forming portion shown, in the state of detaching the left cover of the housing. Herein, as an example, a case in which the air intake port 51 includes a first air intake port 511 and a second air intake port 512 will be described.

In the one embodiment described above, the case in which the first air flow path AP1 and the second air flow path AP2 are communicated with the common air intake port 51 has been described as an example, but the present disclosure is not limited to this case. For example, the first air flow path AP1 may be configured to communicate with the first air intake port 511, and the second air flow path AP2 may be configured to communicate with the second air intake port 512, which is different from the first air intake port 511. In other words, the air intake port 51 may have the first air intake port 511 and the second air intake port 512 which is provided at a position different from the first air intake port 511. The first air intake port 511 may be configured to communicate with the first air flow path AP1, and the second air intake port 512 may be configured to communicate with the second air flow path AP2. As shown in FIGs. 12 and 13, specifically, the first air intake port 511 may be configured to be positioned at the lower rear part of the housing 5, and the second air intake port 512 may be configured to be positioned at an upper rear part of the housing 5. In this case, a distance from the second air intake port 512 to the second position P2 is shorter than a distance from the first air intake port 511 to the second position P2. That is, the second air flow path AP2 is set to be shorter than that in the case of intaking external air via the common air intake port 51. According to such an aspect, external air can flow at a position above the motor 6, where heat is likely to accumulate, via the second air flow path AP2 with a shorter flow path. As a result, the efficiency of cooling the motor 6 can be further enhanced, thereby more improving the workability at high output. In addition, if the first air intake port 511 and the second air intake port 512, which are communicated respectively with the first air flow path AP1 and the second air flow path AP2, are configured to be independent, they can be formed (opened) at arbitrary positions of the housing 5 in consideration of the efficiency of cooling the motor 6 and the like. This aspect contributes to enhancement of degrees of freedom for designing the main body 3.

Further, the present disclosure may be provided in each of following aspects.
(1) An electric work machine configured to cut a work target, comprising: a working portion and a main body, wherein the working portion is configured to cut the work target, the main body includes: a housing; a flow path forming portion; a motor; and a control unit, the motor is configured to generate rotational power for driving the working portion, the control unit is configured to electrically control rotation of the motor, the flow path forming portion forms an air flow path including a first air flow path and a second air flow path, the first air flow path is configured to communicate with an exterior of the housing so as to allow external air to flow to the motor via the control unit, and the second air flow path is configured to communicate with an exterior of the housing so as to allow external air to flow directly to the motor.
   According to such an aspect, air flowing from the second air flow path to the motor flows directly to the motor without cooling the control unit. Therefore, air having a temperature lower than that of air which flows to the motor after cooling the control unit in the first air flow path can flow directly to the motor. Therefore, compared with the configuration in which all the air that has cooled the control unit flows to the motor, the motor can be cooled more efficiently.
(2) The electric work machine according to (1), wherein the first air flow path is configured to allow external air to flow to the motor via a first position, and the second air flow path is configured to allow external air to flow to the motor via a second position which is different from the first position.
   According to such an aspect, air guided by the first air flow path and air guided by the second air flow path can cool different positions of the motor. As a result, the efficiency of cooling the motor can be further enhanced, thereby more improving the workability at high output.
(3) The electric work machine according to (2), wherein the second position is a position corresponding to a downstream side of the first air flow path.
   According to such an aspect, air having a lower temperature, which is guided by the second air flow path and has not cooled the control unit, flows on a downstream side of the first air flow path, thereby cooling a position of the motor, which is hardly cooled because air in the first air flow path after cooling the control unit and the motor flows through. As a result, the motor can be prevented from becoming locally hot, and thus can be cooled more uniformly, whereby the workability at high output is likely to be improved.
(4) The electric work machine according to any one of (1) to (3), wherein the first air flow path is configured to allow external air to flow to the motor at a first air flow rate, and the second air flow path is configured to allow external air to flow to the motor at a second air flow rate which is different from the first air flow rate.
   According to such an aspect, the first air flow rate of the air guided to the motor after cooling the control unit and the second air flow rate of the air guided directly to the motor without cooling the control unit can be set to be different from each other. As a result, the motor can be cooled more appropriately, thereby further improving the workability at high output.
(5) The electric work machine according to (4), wherein the first air flow rate is higher than the second air flow rate.
   According to such an aspect, the first air flow rate that is guided indirectly to the motor via the control unit is higher than the second air flow rate that is guided directly to the motor without cooling the control unit. Therefore, since sufficient air volume for cooling the control unit can be secured, thereby preventing or suppressing the chainsaw from stopping due to the heat generated by the control unit. In addition, since appropriate air volume can be supplied to a position of the motor that is hardly cooled (on a downstream side of the first air flow path), the motor can be cooled more efficiently. As a result, the control unit and the motor can be cooled as necessary and sufficiently, thereby further improving the workability at high output.
(6) The electric work machine according to any one of (1) to (5), wherein the control unit is disposed below the motor.
   According to such an aspect, since heat generated by the heating of the control unit can be dissipated upward along the flow of the air from below to above (upward airflow), by disposing the control unit below the motor, the control unit can be cooled more, thereby preventing the chainsaw from stopping due to the high temperature of the control unit at high output. Therefore, according to the chainsaw having such a configuration, the chainsaw can exhibit the excellent workability at high output while reducing in size.
(7) The electric work machine according to any one of (1) to (6), wherein the first air flow path is, in at least a part thereof, configured to circulate external air upward, after the air passes through the control unit.
   According to such an aspect, since heat generated by the heating of the control unit can be dissipated upward along the flow of the air from below to above (upward airflow), by disposing the control unit below the motor, the control unit can be cooled more, thereby preventing the chainsaw from stopping due to the high temperature of the control unit at high output. Therefore, according to the chainsaw having such a configuration, the chainsaw can exhibit the excellent workability at high output while reducing in size.
(8) The electric work machine according to any one of (1) to (7), wherein the housing includes an air intake port for intaking external air into an interior of the housing, and the air intake port is configured to communicate with the first air flow path and the second air flow path.
   According to such an aspect, by providing the common air intake port to communicate with the first air flow path and the second air flow path, complication of the configuration of the air flow path can be prevented, thereby reducing the size of the chainsaw more. Further, since the provision of only the one filter is required for the common air intake port, the complication of the configuration of the air flow path can be further prevented, thereby reducing the size of the chainsaw furthermore.
(9) The electric work machine according to any one of (1) to (7), wherein the housing includes an air intake port for intaking external air into an interior of the housing, the air intake port includes a first air intake port and a second air intake port which is provided at a position different from a position of the first air intake port, the first air intake port is configured to communicate with the first air flow path, and the second air intake port is configured to communicate with the second air flow path.
   According to such an aspect, external air can flow at a position above the motor, where heat is likely to accumulate, via the second air flow path with a shorter flow path. As a result, the efficiency of cooling the motor can be further enhanced, thereby more improving the workability at high output. In addition, if the first air intake port and the second air intake port, which are communicated respectively with the first air flow path and the second air flow path, are configured to be independent, they can be formed (opened) at arbitrary positions of the housing in consideration of the efficiency of cooling the motor and the like. This aspect contributes to enhancement of degrees of freedom for designing the main body.
(10) The electric work machine according to (8) or (9), wherein the main body further includes a filter, the filter includes a collection surface for collecting a collection target contained in external air, and the collection surface is disposed above the air intake port so as to cover an inlet of the air flow path.
   According to such an aspect, the collection target collected on the collection surface can be removed easily, and efficient cooling of the motor can be maintained, thereby improving the workability at high output.
(11) The electric work machine according to any one of (8) to (10), wherein the main body further includes a battery, and the battery is disposed in the housing so as to form a battery cooling flow path, which communicates with the air flow path, between the battery and the housing.
   According to such an aspect, while the different positions of the motor can be cooled by the first air flow path and the second air flow path, the battery can be cooled by the battery cooling flow path, thereby more improving the workability at high output.
(12) The electric work machine according to any one of (1) to (11), wherein the control unit includes a heat sink that dissipates heat generated by the control unit, the heat sink is configured to: include a plurality of cooling fins; and be disposed in the first air flow path, and the cooling fin is provided such that a longitudinal direction of the cooling fin is parallel to a flowing direction of circulated air.
   According to such an aspect, the control unit can be further cooled by the provision of the heat sink, thereby more improving the workability at high output.
(13) The electric work machine according to any one of (1) to (12), the electric work machine being a cutter, a hedge trimmer, a brush cutter or a chainsaw.

According to such an aspect, the work target can be cut with the cutter, the hedge trimmer, the brush cutter or the chainsaw with improved workability at high output.

Of course, the present disclosure is not limited to the above.

Finally, although various embodiments of the present invention have been described, these are presented as examples and are not intended to limit the scope of the present invention. Other novel embodiments may be implemented in various forms, and various omissions, substitutions, and modification may be made within the scope of invention without departing from the spirit of the present invention. The embodiments or modifications thereof are included in the scope and spirit of the present invention, as well as within the scope of the invention and equivalents thereof recited in the claims.

## Claims

1. An electric work machine configured to cut a work target, comprising: a working portion and a main body, wherein
the working portion is configured to cut the work target,
the main body includes: a housing; a flow path forming portion; a motor; and a control unit,
the motor is configured to generate rotational power for driving the working portion,
the control unit is configured to electrically control rotation of the motor, the flow path forming portion forms an air flow path including a first air flow path and a second air flow path,
the first air flow path is configured to communicate with an exterior of the housing so as to allow external air to flow to the motor via the control unit, and
the second air flow path is configured to communicate with an exterior of the housing so as to allow external air to flow directly to the motor.

2. The electric work machine according to claim 1, wherein
the first air flow path is configured to allow external air to flow to the motor via a first position, and
the second air flow path is configured to allow external air to flow to the motor via a second position which is different from the first position.

3. The electric work machine according to claim 2, wherein
the second position is a position corresponding to a downstream side of the first air flow path.

4. The electric work machine according to any one of claims 1 to 3, wherein
the first air flow path is configured to allow external air to flow to the motor at a first air flow rate, and
the second air flow path is configured to allow external air to flow to the motor at a second air flow rate which is different from the first air flow rate.

5. The electric work machine according to claim 4, wherein
the first air flow rate is higher than the second air flow rate.

6. The electric work machine according to any one of claims 1 to 5, wherein
the control unit is disposed below the motor.

7. The electric work machine according to any one of claims 1 to 6, wherein
the first air flow path is, in at least a part thereof, configured to circulate external air upward, after the air passes through the control unit.

8. The electric work machine according to any one of claims 1 to 7, wherein
the housing includes an air intake port for intaking external air into an interior of the housing, and
the air intake port is configured to communicate with the first air flow path and the second air flow path.

9. The electric work machine according to any one of claims 1 to 7, wherein
the housing includes an air intake port for intaking external air into an interior of the housing,
the air intake port includes a first air intake port and a second air intake port which is provided at a position different from a position of the first air intake port,
the first air intake port is configured to communicate with the first air flow path, and
the second air intake port is configured to communicate with the second air flow path.

10. The electric work machine according to claim 8 or 9, wherein
the main body further includes a filter,
the filter includes a collection surface for collecting a collection target contained in external air, and
the collection surface is disposed above the air intake port so as to cover an inlet of the air flow path.

11. The electric work machine according to any one of claims 8 to 10, wherein
the main body further includes a battery, and
the battery is disposed in the housing so as to form a battery cooling flow path, which communicates with the air flow path, between the battery and the housing.

12. The electric work machine according to any one of claims 1 to 11, wherein
the control unit includes a heat sink that dissipates heat generated by the control unit,
the heat sink is configured to:
include a plurality of cooling fins; and
be disposed in the first air flow path, and
the cooling fin is provided such that a longitudinal direction of the cooling fin is parallel to a flowing direction of circulated air.

13. The electric work machine according to any one of claims 1 to 12,
the electric work machine being a cutter, a hedge trimmer, a brush cutter or a chainsaw.
